# EUROPÄISCHE PATENTANMELDUNG

(11) **EP 1 925 753 A2**
(43) Veröffentlichungstag der Anmeldung: **28.05.2008**
(21) Anmeldenummer: 07018297.7
(22) Anmeldetag: 18.09.2007
(51) Int. Cl.: E02F 9/02

(54) **Zweiwegebagger**

(30) Priorität: 21.11.2006 DE 202006017726 U
(71) Anmelder: Liebherr-Hydraulikbagger GmbH, 88457 Kirchdorf/Iller (DE); ZWEIWEG Schneider GmbH & Co. KG, 42799 Leichlingen (DE)
(72) Erfinder: Dreher, Gerhard, 87727 Babenhausen (DE); Einsiedler, Werner, 87751 Heimertingen (DE)
(74) Vertreter: Laufhütte, Dieter

(57) **Zusammenfassung**

Die vorliegende Erfindung betrifft einen Zweiwegebagger (10) mit einem Unterwagen (14) mit mindestens zwei Achsen (20,22) mit Rädern für die Straßenfahrt und zwei in Betriebsposition schwenkbaren Achsen (30,32) mit Rädern (34,36) für die Schienenfahrt, die jeweils über zwei in einem Anbaurahmen gelagerte Schwingen (44), die über Hydraulikzylinder (38,40) um einen Schwenkpunkt (28) verschwenkbar gelagert sind, wobei die Schwingen wahlweise über eine Traverse (46) starr miteinander verbindbar sind.

## Beschreibung

Die Erfindung betrifft einen Zweiwegebagger nach dem Oberbegriff des Anspruchs 1.

Es sind bereits Zweiwegebagger bekannt, die einen Unterwagen mit mindestens zwei Achsen mit Rädern für die Straßenfahrt und zwei in Betriebsposition schwenkbaren Achsen mit Rädern für die Schienenfahrt aufweisen. Die Räder für die Schienenfahrt weisen jeweils über zwei in einem Anbaurahmen gelagerte Schwingen auf, die über Hydraulikzylinder um einen Schwenkpunkt verschwenkbar sind. Derartige Zweiwegebagger sind multifunktional einsetzbar. Zum einen sind sie wie ein üblicher Mobilbagger als Radfahrzeug straßentauglich und können unabhängig und eigenständig zu ihrem Einsatzort fahren. Durch entsprechendes Ausfahren der mit den Rädern für die Schienenfahrt ausgestatteten Achsen kann der Zweiwegebagger in sehr einfacher Art und Weise zu einem Schienenfahrzeug umfunktioniert werden. Der Antrieb erfolgt durch die angetriebenen Straßenräder, die auf der Schiene abrollen. Die Führung des Zweiwegebaggers dagegen erfolgt über die Schienenräder.

Grundsätzlich ist es bekannt, die zusätzliche Achsenaufnahme der Räder für die Schienenfahrt als pendelnde Achse oder als Starrachse auszuführen. Jede dieser Anordnungen hat spezifische Vorteile. Während die Starrachse eine höhere Stabilität aufweist, fordert diese allerdings sehr gleichmäßig verlegte Schienen für eine ruhige Fahrt des Zweiwegebaggers auf dem Schienenstrang. Dagegen muss eine gute Anpassung an einen vergleichsweise schlechtere Schienensituation, wie sie durch eine Pendellagerung der Achse erzielt wird, mit einer vergleichsweise schlechteren Stabilität während des Einsatzes des Zweiwegebaggers auf der Schiene erkauft werden.

Aufgabe der Erfindung ist es daher, einen gattungsgemäßen Zweiwegebagger derart weiterzubilden, dass er sich von einem Zweiwegebagger mit Starrachsen in leichter Weise in einen Zweiwegebagger mit Pendelachse umrüsten lässt.

Erfindungsgemäß wird die Aufgabe durch die Kombination der Merkmale des Anspruchs 1 gelöst. Demnach sind die zwei in einem Anbaurahmen gelagerten Schwingen, die die schwenkbare Achse mit den Rädern für die Schienenfahrt tragen wahlweise über eine Traverse starr miteinander verbindbar. Hier werden also durch ein Einschieben und Verbinden mit der Traverse die jeweils die Achse lagernden Schwingen bei Bedarf starr miteinander verbunden. So kann ein Zweiwegebagger zum Transport auf den Schienen mit zwei Pendelachsen ausgebildet sein und bei entsprechendem Bedarf kann dann durch einen einfachen Handgriff die Traverse zwischen den Schwingen eingesetzt werden und mit den Schwingen verbunden werden.

Besondere Ausgestaltungen der Erfindung ergeben sich aus den sich an den Hauptanspruch anschließenden Unteransprüchen.

Demnach kann die Traverse aus einem an ihren Enden jeweils geschlossenem Rohr bestehen, das jeweils starr mit der anliegenden Schwinge verbunden ist. Durch die Ausführung als Rohr kann das Gesamtgewicht der Traverse bei hinreichend hoher Festigkeit gering gehalten werden. Lediglich die Endbereiche, mit denen das die Traverse bildende Rohr verschlossen wird, müssen aus einem massiven Material gefertigt werden.

Vorzugsweise kann die starre Verbindung über eine Schraubverbindung erfolgen. Diese Schraubverbindung kann über seitlich von außen in die Schwinge eingeführte Schrauben erfolgen, die in ein entsprechendes in den Endbereichen der Traverse vorgesehenes Gewinde eingeschraubt werden.

Vorteilhaft kann die Traverse jeweils mit ihren Enden formschlüssig in den Schwingen aufgenommen sein.

Die formschlüssige Aufnahme kann in einem schwingenseitigen Schlitz bestehen, in den die Endbereiche der Traverse, die entsprechend der Formgebung des Schlitzes formangepaßt sind, einschiebbar sind.

Zur leichteren Handhabbarkeit ist an der Traverse zumindest ein Handgriff angeformt.

Weitere Merkmale, Einzelheiten und Vorteile der Erfindung werden anhand eines in der Zeichnung dargestellten Ausführungsbeispiels erläutert. Es zeigen:
- Figur 1:: eine Seitenansicht eines Zweiwebebaggers nach einer Ausführungsform der vorliegenden Erfindung,
- Figur 2:: eine perspektivische Detailansicht eines Teils des Zweiwegebaggers gemäß Figur 1 und
- Figur 3:: eine Darstellung gemäß Figur 2, bei der ein entfernbares Bauteil explosionsartig auseinandergezogen ist.

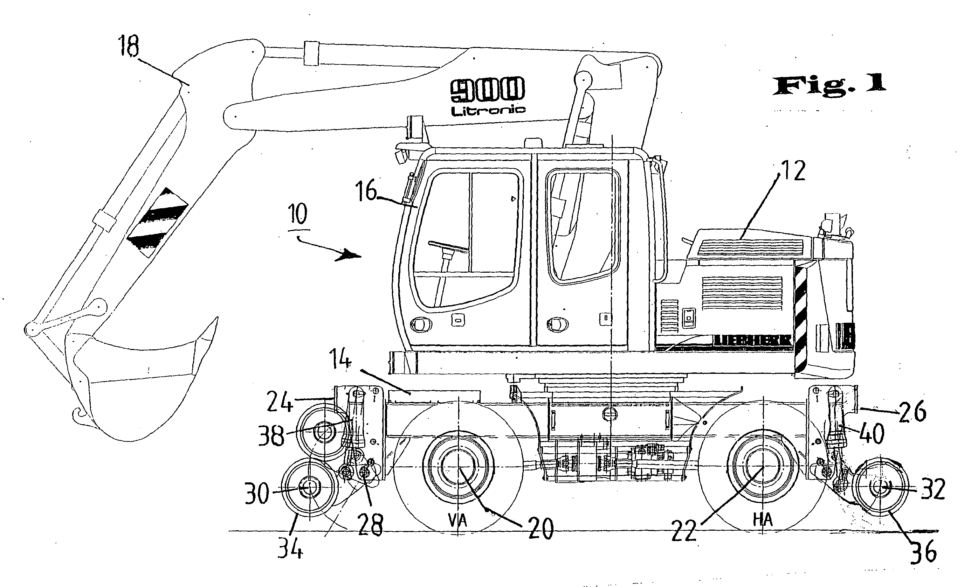

In Figur 1 ist ein Zweiwegebagger 10 dargestellt, der in üblicher Weise einen Oberwagen 12 mit Fahrerkabine 16 und ein angebautes Arbeitswerkzeug 18 - hier in Form eines an einen Löffelstiel angesetzten Löffels - aufweist. Der Unterwagen 14 weist zwei Achsen 20 und 22 auf, die jeweils mit Zwillingsrädern 16, 18 für die Straßenfahrt ausgerüstet sind. Dabei ist die Achse 20 als Starrachse ausgelegt, während die Achse 22 eine gelenkte Achse ist.

Wie es schon bei Zweiwegebaggern als solches bekannt ist, sind an beiden freien Enden, also an der Vorderseite und an der Hinterseite des Unterwagens 14 Anbauten 24 und 26 angeordnet, die zusätzlich um Schwenkpunkte 28 schwenkbare Achsen 30 und 32 tragen. Die Achsen 30 und 32 tragen wiederum Räder 34 und 36 für die Schienenfahrt. Die Achsen 30 und 32 sind jeweils über Hydraulikzylinder 38 bzw. 40 von einer eingefahrenen Stellung in eine Aushebestellung, in der die Achsen für die Straßenfahrt 20 und 22 ausgehoben sind, verschwenkbar. In der Figur 1 sind die Achsen 30 und 32 in teilweise eingefahrener Position gezeigt, wobei an der Vorderseite des Zweiwegebaggers 10 die Achse 30 in einer teilweise hochgeschwenkten Position und in einer vollständig hochgeschwenkten Position gezeigt ist. Hierzu ist der Schwenkradius eingezeichnet. In der Darstellung gemäß Figur 1 ist der Zweiwegebagger 10 für die Straßenfahrt bereit.

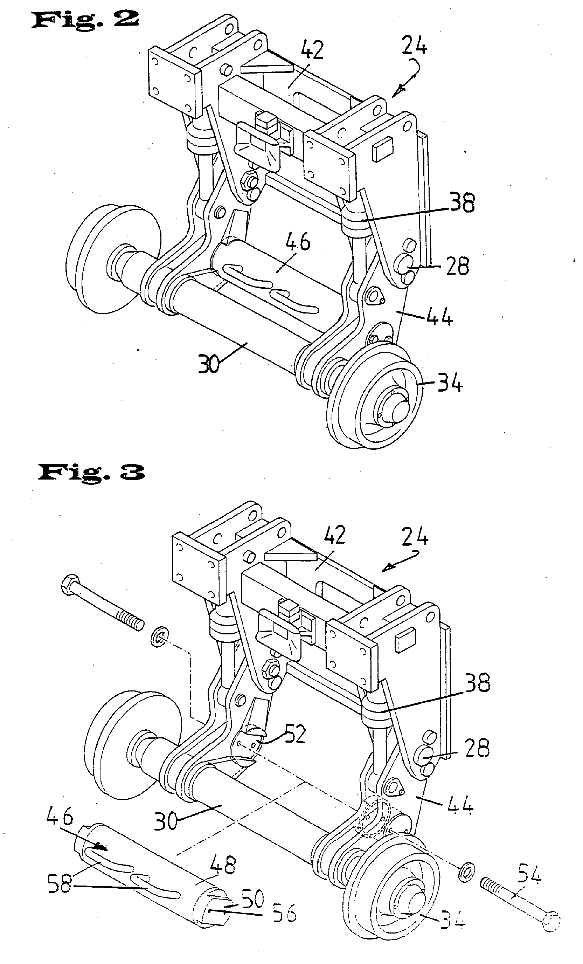

Die Figuren 2 und 3 zeigen Details des Anbaus 24, die in gleicher Weise für den Anbau 26 gelten. Hier ist jeweils ein mit dem Unterwagen 14 gemäß Figur 1 verbindbarer Anbaurahmen 42 gezeigt, der jeweils seitlich um Schwenkpunkte 28 verschwenkbare Schwingen 44 aufweist. Die Schwingen 44 bestehen aus nahezu L-förmigen Blechen, die über Hydraulikzylinder 38 um die jeweiligen Schwenkpunkte 28 verschwenkbar sind. An den freien Enden der Schwingen 44 ist die jeweilige Achse 30 gelagert. Auf dieser ist jeweils an ihrem freien Ende ein Rad für die Schienenfahrt 34 drehend gelagert.

In den Figuren 2 und 3 sind die Anbauten 24 jeweils in einem unterschiedlichen Rüstzustand gezeigt. In der Darstellung gemäß Figur 2 ist die Achse 30 als Starrachse ausgeführt, während sie in Figur 3 als Pendelachse ausgeführt ist. Dies hängt damit zusammen, dass in der Ausführungsform gemäß Figur 2 die beiden Schwingen 44 über eine Traverse 46 fest miteinander verbunden sind. Die Traverse 46 verbindet die beiden Schwingen 44 ungefähr an dem Eckpunkt der L-förmigen Bleche.

In Figur 3 ist die Traverse 46 zwischen den Schwingen 44 entfernt, so dass die einzelnen Schwingen 44 frei pendeln können und so eine Pendelachse 30 am Anbau 24 ausgebildet ist.

Erfindungsgemäß besteht die Traverse 46 aus einem Rohr 48 und zwei endseitigen Verschlußteilen 50. Diese können aus jeweils massivem Material gefertigt sein. Die äußere Form der Verschlußteile 50 kann, wie hier im Ausführungsbeispiel gemäß Figur 3 gezeigt, an entsprechende an den Seitenwänden der Schwingen 44 vorgesehene Schlitze 52 angepaßt sein. Hierdurch lässt sich die Traverse 48 über Ihre Endbereiche 50 einfach in die jeweiligen Schlitze 52 im Bereich der Schwingen 44 einschieben. Zur Befestigung der Traverse dienen Befestigungsschrauben 54, die in zugehörige Gewindebohrungen 56 im Endbereich 50 der Traverse 46 einschraubbar sind. Zur entsprechenden Handhabung der Traverse sind in der Ausführungsform gemäß der Figuren 2 und 3 zwei Handgriffe 58 angeformt.

Somit lässt sich in einfacher Weise die Traverse 46 mit den beiden Schwingen 44 verbinden, so dass eine Umrüstung von einer pendelnden Achse 30 gemäß Figur 3 in eine Starrachse gemäß Figur 2 und umgekehrt in einfacher Art und Weise möglich ist.

## Patentansprüche

1. Zweiwegebagger mit einem Unterwagen mit mindestens zwei Achsen mit Rädern für die Straßenfahrt und zwei in Betriebsposition schwenkbaren Achsen mit Rädern für die Schienenfahrt, die jeweils über zwei in einem Anbaurahmen gelagerte Schwingen, die über Hydraulikzylinder um einen Schwenkpunkt verschwenkbar sind, gelagert sind,
**dadurch gekennzeichnet,**
**dass** die Schwingen wahlweise über eine Traverse starr miteinander verbindbar sind.

2. Zweiwegebagger nach Anspruch 1, **dadurch gekennzeichnet, dass** die Traverse aus einem an ihren Enden jeweils geschlossenem Rohr besteht, das jeweils starr mit der anliegenden Schwinge verbunden ist.

3. Zweiwegebagger nach Anspruch 2, **dadurch gekennzeichnet, dass** die starre Verbindung über eine Schraubverbindung erfolgt.

4. Zweiwegebagger nach einem der Ansprüche 2 oder 3, **dadurch gekennzeichnet, dass** die Traverse jeweils mit ihren Enden formschlüssig in den Schwingen aufgenommen ist.

5. Zweiwegebagger nach Anspruch 4, **dadurch gekennzeichnet, dass** die formschlüssige Aufnahme in einem schwingenseitigen Schlitz besteht, in den die Endbereiche der Traverse einschiebbar sind.

6. Zweiwegebagger nach einem der Ansprüche 1 bis 5, **dadurch gekennzeichnet, dass** an der Traverse zumindest ein Handgriff ausgebildet ist.
